# EUROPEAN PATENT SPECIFICATION

(11) **EP 2 129 753 B1**
(45) Date of publication and mention of the grant of the patent: **13.03.2019**
(21) Application number: 08707184.1
(22) Date of filing: 22.01.2008
(51) Int. Cl.: C10L 5/00, C10J 3/00, C10L 5/36, C10L 5/40

(54) **PLASTIC BASED FUEL SOURCE WITH IMPROVED COMBUSTIBILITY**
KUNSTSTOFFBASIERTER BRENNSTOFF MIT VERBESSERTEN VERBRENNUNGSEIGENSCHAFTEN
SOURCE DE COMBUSTIBLE BASÉE SUR DES PLASTIQUES AYANT UNE COMBUSTIBILITÉ AMÉLIORÉE

(30) Priority: 07.03.2007 WO PCT/EP2007/001954
(43) Date of publication of application: 09.12.2009
(73) Proprietor: Subcoal International B.V., 9936 TH Farmsum (NL)
(72) Inventor: NAFID, Mohammed, NL-6227 AW Maastricht (NL); KOEKKOEK, Ralph, NL-1078 LK Amsterdam (NL); VAN DER LINDEN, Alfons, Matheas, Gertrudes, NL-6005 LC Weert (NL); SCHOEN, Löwhardt, Adolf, Albert, NL-6176 BT Spaubeek (NL); SCHRISTOFFEL, Anton, Rudolf, NL-6243 CA Geulle (NL)
(74) Representative: Hoyng Rokh Monegier LLP
(86) International application number: PCT/EP2008/000452
(87) International publication number: WO 2008/107042

(56) References cited:
- EP-A- 1 083 212
- WO-A-96/10149
- WO-A-97/05218
- US-A- 4 236 897

## Description

This invention relates to a waste plastic based fuel source for injection into a furnace or kiln.

In response to environmental, economic and associated regulatory and legislative drivers, there has been an increased trend towards recycling of domestic and industrial waste. Life cycle analysis of recycling processes indicate that decontamination and sorting of individual waste component streams is often not viable in economic and environmental terms. Therefore, there is an increasing emphasis upon the utilization of industrial and domestic waste as a fuel source for power generation or other industrial applications.

The combustion of waste carbonaceous material into furnaces is widespread within industry. The combustion of carbonaceous material in a furnace is achieved via a number of processes. Initially there is the pyrolysis or devolatilization of the carbonaceous material as it heats up which releases volatiles gases and produces char. This process is dependent on the properties of the carbonaceous material and determines the structure and composition of the char, which will then undergo gasification reactions. The combustion process occurs as the volatile products and the char reacts with oxygen to form carbon dioxide and carbon monoxide which provides heat for subsequent gasification reactions.

Modern coal-fired furnaces and power plants are operated by combusting pulverized coal. The coal is ground to a fine powder in a coal mill, which is an integral part of the power plant and is then directly air-blown into the furnace. Due to its small particle size of less than 0.1 or 0.2 mm the pulverized coal burns rapidly. It is known that secondary fuels, e.g. originating from waste or bio-mass, may be burned together with the coal being the primary fuel, if their combustion characteristics are suitable (i.e low burn out time). Depending on the type and properties of the secondary fuel it may be combined with the coal prior to grinding or it may be ground separately and then blown into the furnace either together with the pulverized coal or separately.

The delivery of waste material into a furnace has varied depending upon the nature of the waste material and the type of furnace being supplied. Conventionally, plastic based waste is formed into pellets and combined with coal and fed into a furnace. For instance, US 5342418 discloses the use of a thermoplastic and cellulosic fiber in fuel pellets as an admixture with coal for delivery into conventional coal fire furnaces using conventional coal handling equipment, such as underfeed stokers. The characteristics of the pellets were that it should mix well with coal and burn as long as the coal, which had a typical cross sectional diameter and length of 12mm and 38mm respectively. While this technology provided an alternative fuel source to lump coal, it is unable to replace or be combined with finely ground coal which has a lower burn out time. To overcome this limitation, there has been significant development into the use of ground plastic based waste.

WO 97/05218 discloses a fuel pellet for a pulver furnace comprising densified thermoplastic and optionally coal and/or cellulosic material, in which the plastic and celluloisc material is about 0.074 to 0.17 mm. The pellets expand upon delivery in a pulver furnace to release discrete particles, which due to their size and density burn quicker than larger particles. Critical to the formulation of the pellets is the densification of the plastics which eliminates static electricity and enables more controlled blending of the components.

US 5772727 discloses the injection of plastic particles having a size substantially between 1 mm and 10 mm directly into a furnace for making metal from iron ore. The plastic particles are used as a reducing agent, thus saving coal or coke used for this purpose. The invention overcomes the flow and costs problems associated with using more finely ground material.

DE 19541673 overcomes the poor flowability of plastics which have a 100% size distribution of less than 2-3 mm, and more particularly below 1 mm, by premixing the plastic with ground coal prior to delivery pneumatically into a blast furnace.

US 6635093 and EP-A-1 083 212 address poor flowability by producing a fuel pellet by forcing a cellulose and plastic waste stream through pelletizing die holes with a length to diameter ratio of at least 5, such that the frictional heat melted the outer portion of the pellet. The resultant pellet was sufficiently hard to be directly fed into a furnace. If required, the pellets may also be ground using an ultra-rotor to achieve a particle size distribution having at least 80 wt% of the pellet group to less than 2mm. A high plastic content (eg. above 60 wt% is preferred for the achievement of these results). The freshly ground product is preferably fed directly into a furnace to avoid any transportation problems.

US 6230634 addresses the problem of the relative poor combustibility of plastic based waste material in a furnace through disclosing the injection through tuyeres of synthetic resin material, having a combination of specific surface area and/or particle size limitations, into a blast furnace for iron making. The document investigates the combustion ratio, which measures the effectiveness of the synthetic resin material blown into the furnace compared to performance of coke particles of 20 to 30mm diameter. It was found that plastic particles having a particle size around 2mm (i.e 1 to 3mm) had a significantly reduced combustibility compared to coke. While a further reduction in particle size was considered to lead to an increased specific surface area and hence increased combustion rates, this also resulted a lower degree of combustion due to the increased flying of the particles outside of the combustion zone. In addition, finer particles sizes are also associated with higher crushing costs and lower crushing yields.

While the progress has been made in utilizing waste plastic based fuel for increasingly higher performance applications, such as a secondary fuel with finely ground coal in power stations and furnaces, further improvements are still required. In particular, the trend towards more efficient furnaces utilizing fuel or reducing agents injected through lances is reliant upon a fuel source with a low burn out time to enable clean and complete combustion.

It is an object of the present invention to provide a waste plastic material suitable for injection into a furnace or kiln, which has good combustibility as measured by a low burn out time.

### Summary of the invention

In one embodiment of the present invention there is provided a fine particulate material for use as a fuel source or reducing agent derived from waste plastic material comprising:
(a) a cellulose component; and
(b) a plastic component,
wherein the dry weight ratio of the cellulose component to the plastic component is greater than 2:3 and wherein the dry weight ratio of the cellulose component to the plastic component is less than 9:1, the cellulose/plastic mixture has a particle size distribution such that at least 95 wt% of the particles are less than 2.0 mm, based upon the total dry weight volume of the cellulose/plastic mixture, the mode of the particle size distribution is between 0.3 and 1.8 mm, and wherein the cellulosic and thermoplastic materials constitute a total of at least 60 weight % of the mixture, based on total solid components.

The combination of the composition and particle size distribution of the fine particulate material have unexpectedly been found to improve combustion performance of the material.

The combination of cellulose and plastic particles provide a synergistic effect in regard to combustibility. While not wanting to be held by theory it is thought that the cellulose particles combust through an initial rapid vaporization of the material into a char component. In contrast, the plastic particles require a higher ignition temperature and thus typically require a longer residence time before combustion is initiated. However, through providing a sufficient amount of cellulose derived material relative to the plastic component, there is a sufficient magnitude of rapid energy release from the cellulose proportion such that the plastic particles more rapidly reach their ignition temperature, thus leading to a total reduction in the burn out time of the combined fuel mixture.

It has also been found that by more finely grinding the mixture to below 2.8 mm, the variation in burn out time is significantly reduced. A low and consistent burn out time is required to enable furnaces and kilns to be optimized to operate efficiently and effectively.

The ratio of the cellulose component to the plastic component required to achieve a sufficient magnitude of rapid energy release from the cellulose component to reduce the burn out time of the mixture as a whole is dependent upon the types of plastics, and their ignitions temperature, which make up the plastic component. Those skilled in the art will be readily able to determine the required ratio of the cellulose and plastic components through routine experimentation. Preferably, the dry weight ratio of the cellulose component to the plastic component is at least 1:1 and more preferably at least 3:2. The upper limit of the proportion of cellulose component is generally limited to the proportions of available waste material and the energy density value requirements of the fuel source. As such, the upper limit of the dry weight ratio of the cellulose component to the plastic component is less than 9:1 and preferably less than 4:1.

### Brief Description of the Figure

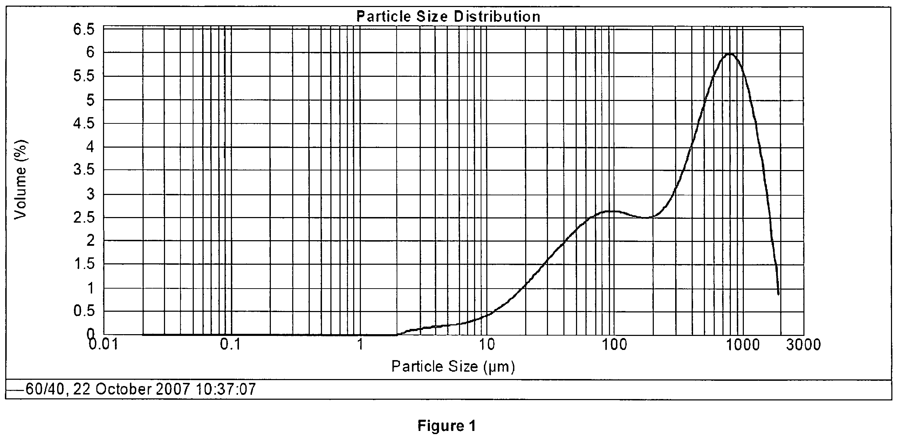

Figure 1 illustrates the particle size distribution of a mixture within the scope of the present invention determined using laser diffraction techniques in accordance with ISO 13320-1:1999 (Particle size analysis - Laser Diffraction methods) using a Malvern Mastersizer 2000.

### Detailed description of the invention

In a preferred embodiment of the present invention, the particulate cellulose/plastic mixture includes both a mixture in which a shortage of plastic (and preferably thermoplastic) material is present, preferably comprising from 5 to less than 40 weight % of thermoplastic material (thus a cellulose-rich mixture), as well as mixtures wherein the content of thermoplastic material is at least 40 weight % and below 60 weight %, each based on the total dry weight of cellulosic and thermoplastic materials.

Typically, the dry cellulose-rich mixtures of the present invention have a lower calorific value, generally from 15 to 25 GJ/t, whereas the conventional cellulose-low mixtures of the prior art have a higher calorific value, preferably from 20 to 40 GJ/t. While the cellulose-low mixtures have the advantage of higher an energy value, this is countered balanced by cellulose rich mixtures which has a reduced burn out time and which are environmentally more sustainable. Thus, the cellulose rich mixture of the present invention will be increasingly desired by industry.

Typically, the cellulose/plastic mixture originates from waste material such as domestic waste (including municipal and urban waste) and/or industrial waste (e.g. "paper-rejects" obtained after separation of the majority of the paper pulp in the paper recycle process). The cellulosic material may originate from, for example, paper, cardboard, beverage cartons, wood, diapers, bandages, and textiles such as cotton, viscose and rayon. Typically, the cellulosic material in the cellulose/plastic mixture is mainly based on paper and/or cardboard.

The ignition temperature of cellulosic material, such as paper is generally less than 250°C. This contrasts with an ignition temperature of typically greater than 500°C for coal. Therefore, the injection of a cellulose component into the furnace results in a more rapid release of energy thus enabling the ignition temperature of the other fuel or reducing agent components to be reached quicker thereby reducing burn out times of the mixture as a whole.

The plastic component is preferably at least 80wt% more preferably at least 90wt% and even more preferably at least 95wt% and most preferably 100wt% thermoplastic material based upon the weight of the total plastic component. The thermoplastic material may originate from, for example, packing material such as polymeric sheet or film material. In principle, all types of thermoplastic polymers can be present in the waste mixture. Examples of thermoplastic polymers that are generally present in the waste streams to be treated include (substituted) polyolefins; polystyrene; polyesters, such as polyethylenterephthalate (PET); polyamides, and copolymers and blends thereof. The thermoplastic material may also comprise halogenated polymers such as poly(vinyl chloride) (PVC) although this is not preferred. In particular, the thermoplastic material in the cellulose/plastic mixture is preferably based on polyethylene homo- and/or copolymers, which have a ignition temperature of about 350°C compared to up to about 550°C for PVC and 420°C for polypropylene.

It will therefore be appreciated that the burn out time of the cellulose/plastic mixture will be dependent upon the types and proportions thereof of plastic. To ensure burn out times are maintained within the desired range of values, the variability of the plastic in the waste stream is monitored and controlled as latter described.

Preferably, at least 60 weight %, more preferably at least 70 weight %, even more preferably at least 75 weight %, and most preferably at least 80 weight % of the thermoplastic material are polyethylene homo- and/or copolymers. The high proportion of polyethylene to plastics with higher ignition temperatures further accelerates the burn out time of the sample as a whole.

Preferably, the burn out time of the mixture is less than 5.1 seconds and more preferably less than 4.8 seconds and most preferably less than 4.0 seconds as determined by the method described herein. The burn out time preferably has a variation over at least 6 samples of no more than 0.4 seconds, more preferably no more than 0.3 seconds and most preferably no more than 0.2 seconds.

The cellulose/plastic mixture optionally comprises further materials in minor amounts, the cellulosic and thermoplastic materials constituting the major components of the particulate mixture. Generally, the cellulosic and thermoplastic materials constitute a total of at least 60 weight % of the mixture, preferably at least 70 weight % of the mixture, more preferably at least 80 weight %, even more preferably at least 90 weight %, and most preferably at least 95 weight %, each based on total solid components. The high proportion of cellulose and plastic ensures consistency in the burn-out performance of the mixture.

The other materials that may optionally be included in the particulate cellulose/plastic mixture according to the present invention include combustible materials, such as thermosetting polymers, and non-combustible materials, such as metals, stones, ceramics, glass, and other inorganic materials used as fillers and/or pigments in the original paper/board and plastics the cellulosic and/or thermoplastic materials originate from. Non-combustible materials generally lower the calorific value of the mixture and increase the ash content and are therefore not preferred.

The water (moisture) content of the fine particulate cellulose/plastic mixture of the present invention is preferably less 5 weight %, more preferably less than 3 weight %, even more preferably less than 2 weight %, and most preferably less than 1 weight %, each based on the total dry weight of the cellulose/plastic mixture. The evaporation of moisture from the mixture has a cooling effect and thus extends the time taken by the components to reach their ignition temperature. Therefore, the lower the moisture level the lower the burn out times achievable by the cellulose/plastic mixture.

At least 95% and more preferably at least 97.7 weight % and even more preferably at least 99 weight % of the particles have a particle size of less than 2.0 mm. The greater the proportions of the fuel source below 2.0 mm the lower the variance of the burn out times. More preferably at least 99 weight % of the particles have a particle size of less than 1.5 mm, and even more preferably at least 99 weight % of the particles have a particle size of less than 1.4 mm. Within this particle size range, the cellulose/plastic mixture is preferably used as a secondary fuel with fine coal dust as the primary fuel. Most preferably, at least 60 wt%, more preferably at least 70 wt%, even more preferably at least 80 wt% and most preferably at least 85wt% of the cellulose/plastic mixture has a particle size of less than 1 mm.

The average particle size of the mixture is preferably between 0.3 and 1.2 mm and more preferably 0.5 to 1.0 mm. Average particle size values within this provide a good balance between flowability, low combustion burn out times and variations thereof.

The typical lower limit of particle size range will be governed by the grinding process and the economics thereof. However, the lower particle size limit of the cellulose/plastic mixture is typically between 1 and 5 *µ*m, with generally at least 5 vol% of the mixture being below 50 *µ*m, based upon the total volume of the cellulose/plastic mixture, with a mode of the particle size distribution at least 0.3 mm, more preferably at least 0.5 mm and most preferably at least 0.8 mm. These fine particles are particularly beneficial when mixing the cellulose/plastic mixture with finely ground coal of a similar particle size range. [Having a mode below 0.3 mm may lead to increased flying of particles outside the combustion zone and hence leads to lower levels of combustion. Further, too fine a particle size leads to increased transportation problems through the lances, as finer thermoplastic particles are more susceptible to agglomerate and/or smear on the inner surfaces of the lances as the particles approach the higher temperatures of the furnace injection point.

It has been found that the burn out time of the cellulose/plastic mixture has even less variance at these finer particle sizes. A low variance in the burn out time of the fuel source is important in ensuring that the furnace combustion conditions can be tightly controlled for optimum energy efficiency. The particle size distribution is determined by sieving, unless indicated otherwise.

The fine particulate cellulose/plastic mixture according to the present invention may be combined with further carbonaceous material for delivery into a furnace. The further carbonaceous material preferably has a burn out time of a similar or lower value to that of the cellulose/plastic mixture. The carbonaceous material may include gaseous material (such as gaseous hydrocarbons) or liquid fuels, especially derived from high energy containing waste streams, with the resulting admixtures forming a gaseous or liquid slurry. The dry weight ratio of the mixture to the further carbonaceous material is preferably at least 1:50, more preferably at least 1:20 and even more preferably at least 1:5.

The fine particulate cellulose/plastic mixture according to the present invention is particularly suitable for use as secondary fuel in addition to a primary fuel, preferably in coal-fired power plants or lime kilns. The fine particulate cellulose/plastic mixture may either be mixed with the primary fuel, i.e. the pulverized coal, before they are supplied together to the burner or it may be supplied to the burner separately from the coal or it may be directly supplied to the furnace in the boiler. Preferably, the fine particulate mixture is dosed to the furnace separately from the pulverized coal; it is directly supplied to the flames of the primary fuel. The particulate cellulose/plastic mixture wherein at least 99 weight % of the particles have a particle size of less than 1.4 mm is also particularly suitable for use as secondary fuel in power plants generating synthesis gas. As the dosing system in those power plants is operated under high pressure through lances, typically 30 to 35 bar (3 to 3.5 MPa) it is required that the amount of particles having a size of 1.4 mm and more is minimized to ensure transportation problems are avoided. Other uses of the particulate cellulose/plastic mixture according to the present invention include, for example, the use as secondary fuel in blast furnaces, lime kilns and cement kilns.

The particle size of the ground coal is preferably, such that at least 80wt % of the particles are less than 200 *µ*m, more preferably less than 150 *µ*m and most preferably less than 100 *µ*m, based upon the total weight of the coal. The lower the particle size, the higher the combustion rate, the higher the % of heat delivered by radiation, the smaller the deposition of ash and slag and the lower the flame length.

The admixture preferably comprising at least 2.5 wt%, more preferably at least 5 wt%, more preferably at least 10 wt%, even more preferably at least 20 wt% and most preferably at least 30 wt% of the cellulose/plastic mixture, based upon the total weight of the admixture. As the level of the cellulose/plastic mixture increases, so does the economic benefits of using the mixture as a secondary fuel source. The maximum level of the cellulose/mixture in the admixture is limited by segregation problems which may arise, particularly if there is significant difference in particle size distributions between the components of the admixture.

In embodiments, in which the cellulose/plastic mixture forms an admixture with the further carbonaceous material, such as finely ground coal, the particle size distributions are preferably similar, such that homogeneous mixing is promoted. Preferably, at least 20 wt%, more preferably at least 25% wt and most preferably at least 30 wt% of the particle have a particle size distributions that overlaps with the particles from the finely ground carbonaceous material. For example, 100% of the ground coal has a particle size distribution below 200 *µ*m, and 35wt% of the cellulose/plastic mixture has a particle size of less than 200 *µ*m, results in an overlap of 35wt% between the coal and cellulose/plastic mixture.

Advantageously, the particle size distribution of the fuel source has a bimodal distribution, or at least biased towards finer particles sizes to improve the homogeneity of the admixture. Typically, one mode is above 500 *µ*m and the other below 500 *µ*m. The formation of a biomodal distribution enables better mixing of the admixture to be achieved, while minimizing the cost of grinding the fuel source.

Biased towards finer particles sizes means, for the purposes of the present invention, that the median value is closer to the upper 95% size limit than the lower 95% size limit. Preferably, the ratio between the median and upper 95% size limit and the median and lower 95% size limit is less than 0.9, more preferably less than 0.7 and most preferably less than 0.5.

Improved mixing of the particles improves homogeneity, promotes better flowability and reduces variations in combustibility.

In one special embodiment, the cellulose/plastic mixture of the present invention is combined with a liquid fuel. The high cellulose content of the mixture provides a high absorptive property which can be used to convert particularly viscous liquid fuels into a more easily transportable form. For instance, the cellulose/plastic mixture may be mixed with a waste resinous material from a petroleum or plastic processing plant thereby forming a separable solid material which is more easily transported and delivered into the furnace or kiln. Preferably, at least 20wt% and more preferably at least 30 wt% of the cellulose/plastic mixture is added to the liquid fuel to produce a more transportable fuel source or reducing agent. In this embodiment, the cellulose/plastic mixture functions as a secondary fuel source / reducing agent and processing aid.

For obvious reasons any fuel should be low in components that result in noxious substances in the flue gas or substances that damage the combustion unit. During combustion, chlorine, either contained in organic compounds or inorganic chlorine in combination with organic material, may convert into highly toxic chlorine-containing organic compounds, such as polychlorinated dibenzodioxins, usually called "dioxins", polychlorinated biphenyls (PCBs) and related compounds. Moreover, hydrogen chloride may be formed during the combustion of chlorine-containing materials; said hydrogen chloride may cause corrosion of the materials being in contact with the flue gas. Thus, it would de desired to provide a fuel having a low amount of total chlorine.

According to a preferred embodiment of the present invention the particulate cellulose/plastic mixture comprises no more than 1.0 weight % of total chlorine, more preferably no more than 0.6 weight % of total chlorine, even more preferably no more than 0.3 weight % of total chlorine, and most preferably no more than 0.2 weight % of total chlorine each based on the dry weight of the cellulose/plastic mixture. Total chlorine includes chlorine originating from chlorine-containing inorganic compounds, i.e. mainly in the form of chloride, and chlorine-containing organic compounds. Total chlorine is determined according to ASTM D 4208-97.

Generally, considerable efforts are taken to lower the ash content of a fuel because several components of the ash, for example, alkalis in combination with SiO₂ may form a slag that deposits on various locations of a power plant or a similar combustion unit and is very difficult to remove. Typically, the particulate cellulose/plastic mixture according to the present invention has an ash content of less than 20 weight %, preferably less than 10 weight %, and more preferably less than 7 weight %, each based on the dry weight of the cellulose/plastic mixture.

Another advantageous feature of the cellulose/plastics mixtures of the present invention is their resultant ash material exhibits a higher hemisphere and flow temperature compared to mixtures with a higher plastic content.

The hemisphere temperature is the temperature at which the test sample forms approximately a hemisphere, i.e. when the height becomes equal to half of the base diameter. The flow temperature is the temperature at which the ash spreads out over a supporting tile, the height of which is half the height of the test sample at the hemisphere temperature.

A higher flow temperature of the ash of the present invention enables the ash material to resist slag formation, thereby minimizing the time required for furnace maintenance to remove slag. Preferably, the flow temperature of the ash is greater than 1200°C, more preferably greater than 1235°C and more preferably greater than 1270°C. Preferably, the hemisphere temperature is greater than 1190°C, more preferably greater than 1205°C and most preferably greater than 1225°C.

The fine particulate cellulose/plastic mixture according to the present invention has superior combustion behavior, i.e. it has a high combustion rate and ash formation is reduced due complete combustion. Moreover, the small particles sizes of the cellulose/plastic mixture result in better pneumatic transporting properties, especially in small pipes. In cases where the cellulose/plastic mixture is mixed with the pulverized primary fuel prior to combustion the particles of the cellulose/plastic mixture are characterized by an outstanding compatibility with the particles of the primary fuel, i.e. no or only little segregation occurs.

The cellulose/plastic mixture of the required composition may be formulated through the combination of variation waste streams or from one waste stream.

In another embodiment of the present invention there is provided a method for making the fine particulate cellulose/plastic mixture of the invention, comprising the steps of:
(a) processing a waste plastic material such that it has a cellulose component and a plastic component and dry weight ratio of the cellulose component to the plastic component is at least 2:3;
(b) optionally forming a pellet from the product of step (a);
(c) grinding the product of step (a) or (b), such that 95 wt% of the of the particles in the mixture are less than 2.0 mm, based upon the total dry weight of the cellulose/plastic mixture.

Preferably the burn out time at 1200°C for complete combustion of the mixture is less than 5.5 seconds.

Appropriate variations to the above process limitations may be made based upon the previous embodiments describing the cellulose/plastic mixture.

The cellulose and plastic components may originate from separate streams and be ground separately prior to forming the mixture, as described in WO 97/05218.

Alternatively, another method for preparing the fine particulate cellulose/plastic mixture according to the present invention comprises grinding cellulose/plastic pellets having a maximum diameter of 10 mm, preferably 8 mm, more preferably 6 mm, even more preferably 5 mm and most preferably 4 mm, and a minimum Kahl hardness of 10 kgf, preferably 15 kgf, and more preferably 20 kgf, in an air turbulence mill.

The Kahl hardness is determined by using a KAHL pellet hardness tester available form AMANDUS KAHL GmbH & Co. KG, Reinbek, Germany.

The cellulose/plastic pellets may, for example, be prepared according to the teachings of co-pending application PCT/EP2007/001951, which provides a method of making cellulose/plastic pellets in which a particulate cellulose/plastic mixture comprising more than 60 to 95 weight % of cellulosic material and 5 to less than 40 weight % of thermoplastic material, based on the total dry weight of cellulosic and thermoplastic materials, and 1 to 15 weight % of moisture, based on the total weight of the mixture, is supplied at a temperature T₁ of at most 90°C to a pelletizing device comprising an annular mould with holes having a diameter D of at most 8 mm and an effective hole length L to hole diameter D ratio R of at least 7, the values of R and T₁ being chosen in relation to one another so that the temperature T₂ of the pellets leaving the annular mould is between 80 and 125°C and the T₂ - T₁ rise in temperature is at least 10°C.

It has been found that the smaller and harder the pellets, the smaller the particle size of the ground powder. If required, an additional screening step may be required to reduce the proportion of particles above the 2.0 mm limit.

An example of the particle size distribution of a cellulose/plastic mixture within the scope of the present invention is provided in Figure 1, which displayed the results of a cellulose/plastic mixture having a dry weight ratio of the cellulose component to the plastic component of about 3:2. As the cellulose/plastic mixture is generally homogeneous over the particle size range, the % volume distribution shown would also be reflective of the % weight distribution.

In an air turbulence mill the particles are reduced in size mainly by collisions with each other, the collisions being induced by an air jet or any other gas jet. Generally, the water content of the particles is reduced during the grinding process in the air turbulence mill. If desired, the drying effect may be enhanced further by using a heated gas jet. An air turbulence mill that is particularly suitable to prepare the particulate cellulose/plastic mixture according to the present invention comprises a rotor which carries individual milling plates vertically arranged in several milling sections and a single cylindrical stator common to all milling sections, a conveyor gas being used to carry the material through the mill, the major fraction of the material being broken up by collisions with each other induced by the turbulences between the stator and the rotating milling plates, and only a minor fraction of the material being broken up by interactions of the material with the stationary or rotating elements of the mill. Air turbulence mills of this type are, for example, described in US 5845855. Air turbulence mills that are suitable for the present process are, for example, commercially available from Altenburger Maschinen Jäckering GmbH, Germany and Görgens Engineering GmbH, Germany.

As explained above, the particulate cellulose/plastic mixture according to the present invention is preferably low in total chlorine. The major portion of the total chlorine originates from organic chlorine compounds, mainly chlorine-containing polymers, such as PVC and PVDC. Typical domestic and industrial waste streams always contain considerable amounts of chlorine-containing polymers and in general, a fuel that is directly prepared from these waste streams will not meet the upper limits of total chlorine specified above.

Further, as the burn out time of the cellulose/plastic mixture is influenced by the composition of the plastic and in particular, the ignition temperature of the plastics component therein, it is desirable to control the proportion of plastic having an ignition temperature above 400°C and preferably at least above that of polyethylene, i.e about 350°C. Preferably, the amount of plastic with an ignition temperature above 400°C is less than 30 wt%, more preferably less than 20 wt% and most preferably less than 10 wt% based upon the total weight of the plastic component.

Thus, in a preferred embodiment of the present invention the processing step (a) further comprises a step of removing at least part of the particles made of a chlorine-containing plastic material or plastic particles having an ignition temperature above 400°C from a coarse particulate cellulose/plastic mixture.

Preferably, the plastic particles removed in step (a) which have an ignition temperature above 400°C comprise non-chlorine-containing plastic material.

The pelletizing step(s) may be performed as it is described in co-pending application PCT/EP2007/001951.

Typically, the coarse particulate cellulose/plastic mixture that is subjected to steps (a) and (b) comprises particles having a maximum particle size of 80 mm, preferably 50 mm, and most preferably 30 mm.

In a preferred embodiment of the present method, the removal of at least part of the particles made of a chlorine-containing plastic material or high ignition temperature is performed by first identifying at least part of the particles made of a chlorine-containing plastic material or high ignition temperature by means of at least one non-contact scanning method and thereafter removing the detected particles. To sort the particles they are, for example, carried on a belt conveyer at known conveyer speed past a material recognition system that uses non-contact scanning to determine the material type and delivers a signal that identifies the material type and is used in sorting the particle according to the material type. A suitable sorting method is, for example, described in US 5794788.

Preferably, the non-contact scanning method is a spectroscopic method, for example using infrared radiation or x-rays. More preferably it is near infrared (NIR) reflectance spectroscopy. It is known that plastics may be identified by IR spectroscopy in the region of the near infrared (NIR). In this region the molecules absorb radiation with overtone and combination oscillations. Plastics having a different chemical structure may be identified by characteristic peaks of characteristic bonds within their molecules. NIR reflectance spectroscopy measures the intensity of the diffused scattered radiation for a particle. Particularly, the intensity is measured at a discrete number of wave lengths simultaneously and the measured intensities are compared. A preferred method for identifying and sorting belt-conveyed particles is one in which the material characteristics of the particles, i.e. the chlorine-containing plastic particles, are spectroscopicly determined by means of an appropriate instrument, e.g. a NIR measuring instrument or an x-ray detector, and sorting takes place at a function of the spectroscopic results by removing the chlorine-containing plastic particles from the conveyer belt. For example, the chlorine-containing plastic particles may be removed by means of a blasting nozzle strip that is located at the end of a belt conveyer, the nozzles being controlled by a computer processing the signals provided by the measuring instrument, optionally in combination with further signals being provided by another non-contact scanning method, for example, an image analysis for location purposes. Methods for identifying and sorting plastics by means of NIR spectroscopy that are useful in the present invention are, for example, taught in DE 4312915, CA 2310838 and US 2001/0045518. A method for identifying and sorting plastics using x-ray radiation is, for example, taught in US 5738224.

Although a method for identification and removal of at least part of the particles made of a chlorine-containing plastic material which methods includes the use of a belt conveyer is preferred other methods for automatically sorting by means of at least one non-contact scanning method, preferably NIR reflectance spectroscopy, may be employed. For example, the coarse particulate cellulose/plastic mixture may be transported in an air flow at known air flow velocity through a three-dimensional detecting area of an NIR measuring instrument, the chlorine-containing plastic particles are identified and then separated from the air flow. An illustrative method is described in DE 19956624.

In general, any chlorine-containing or high ignition temperature plastic material detectable by a non-contact scanning method, preferably NIR reflectance spectroscopy, can be removed from the coarse particulate cellulose/plastic mixture. Examples of chlorine-containing plastic materials include poly(vinyl chloride)s (PVC) and poly(vinylidene chloride)s (PVDC). As PVC typically constitutes the major portion of chlorine-containing plastic materials to be found in ordinary waste streams it is often satisfactory to remove the PVC by the described method in order to obtain a final fine particulate cellulose/plastic mixture having the desired low content of total chlorine. In one embodiment, the above sorting techniques are used to reduce the level of transparent plastic components. Transparent plastics have a lower absorption of radiant heat which results in a increased burn out time. Therefore, the plastic component is preferably concentrated with pigmented plastics which more readily absorb radiant energy.

Prior to the pelletizing step and optional sorting step, additional optional measures may be taken in order to reduce the ash content of the final fine particulate cellulose/plastic mixture. Amongst others, the ash originates from SiO₂-containing impurities in the cellulose/plastic mixture, such as stones/sand, ceramics and glass. Said impurities as well as other non-combustible impurities, e.g. metals, that are heavier than the cellulose/plastic materials may be separated at various stages - depending on particle size - of the preparation process providing the coarse cellulose/plastic mixture for subjecting to the pelletizing step or the optional sorting step preceding the pelletizing step.

Typically, coarse particulate cellulose/plastic mixtures originating from waste streams comprise a considerable amount of moisture that is removed in a drying step. Performing the drying step in a tubular drying vessel that is slightly inclined downwards large particles heavier than the cellulosic and thermoplastic material move downwards inside the tubular vessel and are separated from the cellulose/plastic mixture at the outlet of the tubular vessel.

Preferably, the dried cellulose/plastic mixture is then passed to a wind sifter where smaller particles heavier than the cellulosic and thermoplastic particles are separated.

The resulting particulate cellulose/plastic mixture is preferably collected in a cyclone and then optionally placed on a vibrating belt conveyer having a plurality of holes in the belt. The holes have a diameter of e.g. 5 mm and all fine particles smaller than 5 mm are separated through the holes, the adhesion forces between the particles being overcome by the vibrations. The holes may also have a smaller diameter of less than 5 to 3 mm to only separate even smaller particles. It has been found that the fine particles passing through the holes mainly consist of heavier ash-forming non-combustible materials, such as SiO₂-containing materials, e.g. sand, ceramics and glass. It is believed that the adhesion forces between the fine particles that are made of cellulosic or thermoplastic material are less impacted by the vibrational forces, thereby resulting in improved separation. Thus, they are only contained in the fraction passing through the conveyer belt holes in a minor amount. If a sorting step using a belt conveyer is employed it is preferred to directly pass the particulate cellulose/plastic mixture from the vibrating conveyer belt to the belt conveying the particles to the scanning unit.

The mixtures and admixtures of the present invention are typically used as a source of fuel or reducing agent in furnaces. The mixtures and admixtures are typically fed into the furnace through a pneumatic delivery system, such as a lance.

Unless otherwise indicated, % wt is based upon the total dry weight of the cellulose/plastic mixture.

### Examples

### Test methods

Particle size distribution was determined by use of screening sieves as known in the art or laser diffraction techniques in accordance with ISO 13320-1:1999 (Particle size analysis - Laser Diffraction methods) using a Malvern Mastersizer 2000.

The flow temperature was determined in accordance with CEN/TS 15404:2006 - Solid recovered fuels. The determination of ash melting behaviour was performed by using characteristic temperatures.

### Materials

Low plastic fraction composition comprising 40wt% plastic and 60wt% cellulose based material.

High plastic fraction composition comprising 70wt% plastic and 30wt% cellulose base material.

### Burn out time and sample composition

Agglomerates were formed from the fuel particles largely as a result of the interaction between fibrous components of the fuel. These agglomerations are mostly created during the injection of the fuel into the tube furnace. The agglomerates may be of varying sizes, but the maximum considered was limited to 100 mg which reflected the maximum agglomerate size for a typical fuel feeding or injection system. The samples (100 mg) were injected into a tube furnace having a stoichiometric excess of air (about 100% excess) with a surrounding wall temperature of 1200°C. The time for complete combustion was taken as the time the sample is injected into the furnace to the time complete combustion is observed. The experiment was repeated six times for the low plastic fraction (example 1) and the high plastic fraction (comparative experiment A).

**Table 1. Burn out time as a function of sample composition**

| Ex. | Sample | Burn-out time (sec) |
|---|---|---|
| 1 | Low plastic fraction | 4.41 |
| A | High plastic fraction | 5.18 |

The results indicate that the low plastic fraction containing a higher cellulose fraction achieved a significantly lower burn out time.

Further testing, using standard sieving techniques, revealed that the variation in burn-out time was found to decrease with particle size. In particular, the particles below 1 mm had a variation (0.1 seconds) of less than half of the particles between 1 - 2.8 mm and almost one fifth of the average variation of particles above 2.8 mm. In contrast, the mean burn-out time was found to be generally independent upon particle size. This may be reflective of the particles having a relatively constant thickness, despite having varying length to width aspect ratios from which the particle's size is determined. A relatively constant particle thickness would result in a relatively constant surface area to volume ratio which is likely to result in the relatively constant burn-out times.

### Hemisphere and flow temperature of the ash

The hemisphere and flow temperature of a high (comparative experiment B) and low plastic content (example 2) was analysed in accordance with CEN/TS 15404:2006, with the resulted recorded in table 2.

**Table 2. Hemisphere and flow temperature of the ash**

| Ex. | Hemisphere temperature | Flow temperature |
|---|---|---|
| 2 | 1230°C | 1280°C |
| B | 1180°C | 1200°C |

The results demonstrate that a fuel source with high cellulose content contributes lower slag formation in the furnace/kiln as evidenced by the higher hemisphere temperature and flow temperature of example 2, compared to the low cellulose comparative experiment B.

## Claims

1. A fine particulate material for use as a fuel source or reducing agent derived from waste plastic material comprising:
(a) a cellulose component; and
(b) a plastic component,
wherein the dry weight ratio of the cellulose component to the plastic component is greater than 2:3 and wherein the dry weight ratio of the cellulose component to the plastic component is less than 9:1, the cellulose/plastic mixture has a particle size distribution such that at least 95 wt% of the particles in the mixture are less than 2.0 mm, based upon the total dry weight of the cellulose/plastic mixture, the mode of the particle size distribution is between 0.3 and 1.8 mm, and wherein the cellulosic and thermoplastic materials constitute a total of at least 60 weight % of the mixture, based on total solid components.

2. The material according to claim 1, wherein the particles size distribution is such that at least 60 weight % of the particles in the mixture are less than 1 mm, based upon the total dry weight of the cellulose/plasticmixture.

3. The material according to claim 1, wherein the particle size distribution is such that at least 97.7 wt% of the particles in the mixture are less than 2.0 mm.

4. The material according to anyone of the preceding claims, wherein the dry weight ratio of the cellulose component to the plastic component is greater than 1:1.

5. The material according to anyone of the preceding claims, wherein the dry weight ratio of the cellulose component to the plastic component is lessthan 4:1.

6. An admixture comprising the mixture according to anyone of the preceding claims and a further carbonaceous material.

7. The admixture of claim 6, wherein the further carbonaceous material iscoal, the coal having a particle size distribution, such that at least 80 wt% of the coal particles are less than 200µm, based upon the total weight of the coal particles.

8. The admixture according to claim 6 or 7, wherein the dry weight ratio of the mixture to the further carbonaceous material is at least 1:50.

9. The admixture according to claim 8, wherein the mixture has at least20wt% of particles within the particle size distribution range of the further carbonaceous material, based upon the total dry weight of the cellulose/plastic mixture.

10. A method for making a fine particulate cellulose/plastic material from waste plastic material, comprising the steps of:
(a) processing a waste plastic material such that it has cellulose component and a plastic component and the dry weight ratio of the cellulose component to the plastic component is at least 2:3;
(b) optionally forming a pellet from the product of step (a);
(c) grinding the product of step (a) or (b), thereby producing the cellulose/plastic mixture according to claim 1 or 4.

11. The method according to claim 10, wherein the processing step comprises removing at least part of the particles made of a chlorine- containing plastic material and/or plastic particles having an ignition temperature above 400 °C from a coarse particulate cellulose/plastic mixture.

12. The method according to claim 11, wherein at least part of the particles are first identified by means of at least one non-contact scanning method and then removed.

13. Use of the admixture or the mixture according to anyone of claims 1-9 for feeding into a furnace or kiln.

## Patentansprüche

1. Feinpartikelmaterial zur Verwendung als Brennstoffquelle oder Reduktionsmittel, die bzw. das von Abfallkunststoffmaterial abgeleitet ist, umfassend:
(a) eine Cellulosekomponente; und
(b) eine Kunststoffkomponente,
wobei das Trockengewichtsverhältnis der Cellulosekomponente zur Kunststoffkomponente höher als 2:3 ist und wobei das Trockengewichtsverhältnis der Cellulosekomponente zur Kunststoffkomponente weniger als 9:1 ist, wobei die Mischung aus Cellulose/Kunststoff eine Partikelgrößenverteilung aufweist, so dass zumindest 95 Gew.-% der Partikel in der Mischung kleiner als 2,0 mm sind, bezogen auf das Gesamttrockengewicht der Mischung aus Cellulose/Kunststoff, der Modus der Partikelgrößenverteilung zwischen 0,3 und 1,8 mm liegt und wobei die cellulosehaltigen und thermoplastischen Materialien bezogen auf die Gesamtfeststoffkomponenten insgesamt zumindest 60 Gew.-% der Mischung bilden.

2. Material nach Anspruch 1, wobei die Partikelgrößenverteilung derart ist, dass bezogen auf das Gesamttrockengewicht der Mischung aus Cellulose/Kunststoff zumindest 60 Gew.-% der Partikel in der Mischung kleiner als 1 mm sind.

3. Material nach Anspruch 1, wobei die Partikelgrößenverteilung derart ist, dass zumindest 97,7 Gew.-% der Partikel in der Mischung kleiner als 2,0 mm sind.

4. Material nach einem der vorstehenden Ansprüche, wobei das Trockengewichtsverhältnis der Cellulosekomponente zur Kunststoffkomponente höher als 1:1 ist.

5. Material nach einem der vorstehenden Ansprüche, wobei das Trockengewichtsverhältnis der Cellulosekomponente zur Kunststoffkomponente kleiner als 4:1 ist.

6. Beimengung, die die Mischung nach einem der vorstehenden Ansprüche und ein weiteres kohlenstoffhaltiges Material umfasst.

7. Beimengung nach Anspruch 6, wobei das weitere kohlenstoffhaltige Material Kohle ist, wobei die Kohle eine Partikelgrößenverteilung aufweist, so dass bezogen auf das Gesamtgewicht der Kohlepartikel zumindest 80 Gew.-% der Kohlepartikel kleiner als 200 µm sind.

8. Beimengung nach Anspruch 6 oder 7, wobei das Trockengewichtsverhältnis der Mischung zum weiteren kohlenhaltigen Material zumindest 1:50 ist.

9. Beimengung nach Anspruch 8, wobei die Mischung bezogen auf das Gesamttrockengewicht der Mischung aus Cellulose/Kunststoff zumindest 20 Gew.-% Partikel innerhalb des Partikelgrößenverteilungsbereichs des weiteren kohlenstoffhaltigen Materials aufweist.

10. Verfahren zum Herstellen eines Cellulose-/Kunststoff-Feinpartikelmaterials aus Abfallkunststoffmaterial, das die Schritte umfasst:
(a) Aufbereiten eines Abfallkunststoffmaterials, so dass es eine Cellulosekomponente und eine Kunststoffkomponente aufweist und das Trockengewichtsverhältnis der Cellulosekomponente zur Kunststoffkomponente zumindest 2:3 ist;
(b) optional Bilden eines Pellets aus dem Produkt von Schritt (a);
(c) Zermahlen des Produkts von Schritt (a) oder (b), wodurch die Mischung aus Cellulose/Kunststoff nach Anspruch 1 oder 4 produziert wird.

11. Verfahren nach Anspruch 10, wobei der Aufbereitungsschritt das Entfernen zumindest eines Teils der Partikel, die aus einem chlorhaltigen Kunststoffmaterial hergestellt sind, und/oder von Kunststoffpartikeln mit einer Zündtemperatur von über 400 °C aus einer Grobpartikelmischung aus Cellulose/Kunststoff umfasst.

12. Verfahren nach Anspruch 11, wobei zumindest ein Teil der Partikel zunächst mithilfe zumindest eines kontaktlosen Abtastverfahrens identifiziert und danach entfernt wird.

13. Verwendung der Beimengung oder Mischung nach einem der Ansprüche 1 bis 9 zum Speisen in einen Ofen oder Brennofen.

## Revendications

1. Matière particulaire fine destinée à être utilisée comme source de combustible ou agent réducteur provenant de déchets de matières plastiques, comprenant :
(a) un composant cellulose ; et
(b) un composant matière plastique,
le rapport en poids sec du composant cellulose au composant matière plastique étant supérieur à 2:3, et le rapport en poids sec du composant cellulose au composant matière plastique étant inférieur à 9:1, le mélange cellulose/matière plastique ayant une distribution de la dimension des particules telle qu'au moins 95 % en poids des particules dans le mélange sont inférieures à 2,0 mm, sur la base du poids sec total du mélange cellulose/matière plastique, le mode de la distribution de la dimension des particules étant entre 0,3 et 1,8 mm, et les matières cellulosiques et thermoplastiques constituant un total d'au moins 60 % en poids du mélange, sur la base des composants solides totaux.

2. Matière selon la revendication 1, dans laquelle la distribution de la dimension des particules est telle qu'au moins 60 % en poids des particules dans le mélange sont inférieures à 1 mm, sur la base du poids sec total du mélange cellulose/matière plastique.

3. Matière selon la revendication 1, dans laquelle la distribution de la dimension des particules est telle qu'au moins 97,7 % en poids des particules dans le mélange sont inférieures à 2,0 mm.

4. Matière selon l'une quelconque des revendications précédentes, dans laquelle le rapport en poids sec du composant cellulose au composant matière plastique est supérieur à 1:1.

5. Matière selon l'une quelconque des revendications précédentes, dans laquelle le rapport en poids sec du composant cellulose au composant matière plastique est inférieur à 4:1.

6. Mélange comprenant le mélange selon l'une quelconque des revendications précédentes et une autre matière carbonée.

7. Mélange selon la revendication 6, dans lequel l'autre matière carbonée est le charbon, le charbon ayant une distribution de la dimension des particules telle qu'au moins 80 % en poids des particules de charbon sont inférieures à 200 µm, sur la base du poids total des particules de charbon.

8. Mélange selon l'une des revendications 6 ou 7, dans lequel le rapport en poids sec du mélange à l'autre matière carbonée est au moins de 1:50.

9. Mélange selon la revendication 8, dans lequel le mélange a au moins 20 % en poids de particules dans la plage de distribution de la dimension des particules de l'autre matière carbonée, sur la base du poids sec total du mélange cellulose/matière plastique.

10. Procédé de fabrication d'une matière particulaire fine à base de cellulose/matière plastique à partir de déchets de matières plastiques, comprenant les étapes consistant à :
(a) traiter des déchets de matières plastiques de telle sorte qu'ils comportent un composant cellulose et un composant matière plastique et que le rapport en poids sec du composant cellulose au composant matière plastique soit d'au moins 2:3 ;
(b) facultativement former des granulés à partir du produit de l'étape (a) ;
(c) broyer le produit de l'étape (a) ou (b), permettant ainsi de produire le mélange cellulose/matière plastique selon l'une des revendications 1 ou 4.

11. Procédé selon la revendication 10, dans lequel l'étape de traitement comprend le retrait d'au moins une partie des particules faites d'une matière plastique contenant du chlore et/ou des particules de matière plastique ayant une température d'allumage au-dessus de 400°C à partir d'un mélange cellulose/matière plastique particulaire grossier.

12. Procédé selon la revendication 11, dans lequel au moins une partie des particules est d'abord identifiée au moyen d'au moins une méthode de balayage sans contact, puis retirée.

13. Utilisation du mélange ou du mélange selon l'une quelconque des revendications 1 à 9 pour l'introduction dans un fourneau ou un four.
